# FASCICULE DE BREVET EUROPEEN

(11) **EP 2 798 282 B1**
(45) Date de publication et mention de la délivrance du brevet: **09.06.2021**
(21) Numéro de dépôt: 12818801.8
(22) Date de dépôt: 21.12.2012
(51) Int. Cl.: F25B 29/00

(54) **CHARIOT AUTONOME DE CONDITIONNEMENT EN TEMPÉRATURE ET DE DISTRIBUTION DE PLATEAUX-REPAS**
AUTONOMER WAGEN ZUR KLIMATISIERUNG UND VERTEILUNG VON LEBENSMITTELTABLETTEN
SELF-CONTAINED TROLLEY FOR TEMPERATURE CONDITIONING AND DISTRIBUTION OF MEAL TRAYS

(30) Priorité: 27.12.2011 FR 1104115
(43) Date de publication de la demande: 05.11.2014
(73) Titulaire: COLDWAY TECHNOLOGIES SA, 33380 Pia (FR)
(72) Inventeur: RIGAUD, Laurent, F-66380 Pia (FR); KINDBEITER, Francis, F-66380 Pia (FR)
(74) Mandataire: Mazabraud, Xavier
(86) Numéro de dépôt international: PCT/FR2012/053052
(87) Numéro de publication internationale: WO 2013/098516

(56) Documents cités:
- FR-A1- 2 766 148
- FR-A1- 2 766 262
- FR-A1- 2 766 262
- LI T X ET AL: "Performance study of a consolidated manganese chloride-expanded graphite compound for sorption deep-freezing processes", APPLIED ENERGY, ELSEVIER SCIENCE PUBLISHERS, GB, vol. 86, no. 7-8, 1 juillet 2009 (2009-07-01), pages 1201-1209, XP025973515, ISSN: 0306-2619, DOI: 10.1016/J.APENERGY.2008.06.004 [extrait le 2008-07-10]

## Description

La présente invention concerne un chariot notamment destiné à la distribution de plateaux-repas et à la mise en température des aliments contenus sur ces derniers.

On rencontre de tels chariots dans le domaine de la restauration, et notamment de la restauration en milieu hospitalier, où il est nécessaire de maintenir à température des aliments devant être consommés chauds tels que notamment les soupes, les viandes et les légumes, et des aliments devant être consommés froids tels que notamment certaines entrées, les fromages et les desserts.

On a proposé dans l'état antérieur de la technique, et notamment dans le brevet US 4.974.419, de faire appel à des armoires de stockage qui sont pourvues de moyens de chauffage et de moyens de réfrigération et qui permettent de maintenir respectivement chauds et froids les aliments qu'elles contiennent avant d'en effectuer la distribution aux bénéficiaires. On a ainsi proposé des systèmes qui comprennent, par exemple, une résistance électrique pour apporter les calories nécessaires au maintien en température des produits devant être servis chauds et qui comprennent, par exemple, des moyens à compresseur pour apporter les frigories nécessaires au maintien en température des produits devant être servis froids.

De tels systèmes sont de nature très complexe et sont onéreux puisqu'ils additionnent des moyens producteurs de chaleur et des moyens producteurs de froid. Par ailleurs, ces systèmes sont fixes et ne permettent donc pas de maintenir à température les aliments pendant la phase du service, si bien que lorsqu'ils sont servis aux bénéficiaires les aliments chauds se sont refroidis et les aliments froids se sont réchauffés.

C'est pourquoi on a proposé, notamment dans le brevet EP 1.518.486, des plateaux-repas comportant deux zones spécifiques, à savoir une zone dite « zone chaude » dans laquelle on dispose les aliments devant être consommés chauds et une « zone froide » dans laquelle on dispose les aliments devant être consommés froids. Ces plateaux sont disposés sur des chariots de distribution spécifiques qui comportent deux volumes internes respectifs dans lesquels les plateaux sont empilés sur des racks de façon que l'ensemble des zones chaudes des plateaux se trouve dans un volume chauffé dit « volume chaud » et l'ensemble des zones froides des plateaux se trouve dans un volume refroidi dit « volume froid ». Les chariots de ce type ne sont cependant pas autonome, dans la mesure où ils ne sont pas en mesure d'assurer le chauffage et le refroidissement des aliments pendant la phase de distribution des plateaux-repas.

On connaît par ailleurs des chariots de transport de plateaux-repas de type autonome. On connaît ainsi par le brevet FR 2.766.148 un chariot de transport de plateaux-repas dans lequel la chaleur et le froid nécessaires au maintien en température des aliments sont respectivement fournis par deux systèmes thermochimiques distincts, à savoir deux systèmes thermochimiques de type dit à résorption c'est-à-dire qui font appel chacun à deux réservoirs contenant un gaz tel que notamment de l'ammoniac, et qui sont reliés par une vanne de commande.

On sait que de tels systèmes sont très peu efficaces sur le plan thermodynamique et nécessiteraient pour être en mesure de produire l'énergie nécessaire au fonctionnement d'un tel chariot des systèmes thermochimiques d'un volume et d'un poids totalement prohibitifs dans le cadre de l'application proposée.

La présente invention a pour but de proposer un chariot distributeur de plateaux-repas qui soit en mesure de générer simultanément et de façon autonome de la chaleur dans le volume chaud et du froid dans le volume froid et ce pendant une durée suffisante pour permettre au personnel de service d'assurer la bonne distribution de ces plateaux-repas. De plus, dans la mesure où l'on sait que la masse des aliments chauds contenus sur un plateau-repas est de l'ordre du double de celle des aliments froids, la quantité de chaleur produite doit être sensiblement le double de la quantité de froid.

La présente invention a ainsi pour objet un chariot autonome de conditionnement en température et de distribution de plateaux-repas comportant deux compartiments séparés par une paroi isolante, à savoir un compartiment à chauffer, dit compartiment chaud, et un compartiment à refroidir, dit compartiment froid, recevant au moins un empilement de plateaux-repas disposés de façon qu'une partie de chaque plateau-repas prenne place dans le compartiment chaud et l'autre partie de celui-ci prenne place dans le compartiment froid, dans lequel le chauffage du compartiment chaud et le refroidissement du compartiment froid sont simultanément obtenus au moyen d'un système thermochimique du type comportant au moins un réacteur, contenant un matériau réactif solide et un réservoir associé à un évaporateur qui contient un gaz liquéfié dans lequel, lorsque le réacteur et le réservoir sont mis en communication, le gaz liquide contenu dans le réservoir se vaporise, ce qui absorbe une certaine quantité de chaleur, si bien qu'il y a production de froid côté évaporateur, et ce gaz est absorbé par le matériau réactif générant ainsi une réaction chimique à absorption exothermique, si bien que le réacteur est la source d'un dégagement de chaleur, et dans lequel, une fois la réaction terminée, lorsque l'on réchauffe le produit contenu dans le réacteur, on libère le gaz absorbé par le matériau réactif et celui-ci se condense alors dans l'évaporateur, caractérisé en ce que le réacteur et l'évaporateur du système thermochimique sont respectivement et exclusivement disposés dans le compartiment chaud et dans le compartiment froid, et en ce que le matériau réactif est constitué d'un mélange compacté de chlorure de manganèse et de graphite naturel expansé (GNE), et le gaz est constitué d'ammoniac.

La demanderesse a ainsi constaté qu'un système thermochimique unique du type précité était en mesure de fournir à la fois et simultanément la chaleur nécessaire au compartiment chaud et le froid nécessaire au compartiment froid.

En effet dans un tel système, lors de la réaction directe, c'est-à-dire lorsque l'on admet dans le réacteur le gaz contenu dans le réservoir, ce dernier se vaporise en sortie de ce réservoir, ce qui a pour résultat de générer du froid et, simultanément, suivant la réaction thermochimique précitée, le gaz est absorbé par le produit réactif générant ainsi une réaction chimique à absorption exothermique avec pour conséquence une production de chaleur. Une telle chaleur, qui était néfaste dans les systèmes thermochimiques de production de froid connus et qui devait être éliminée, est utilisée ici en tant que source de chaleur pour chauffer les aliments.

Le choix d'un tel système thermochimique se révèle particulièrement intéressant dans la mesure où la quantité de chaleur produite par celui-ci est sensiblement le double de la quantité de froid lorsque l'on sait que le volume des aliments déposés dans le volume chaud est sensiblement le double de celui déposé dans le volume froid. A cet effet la paroi de séparation entre le compartiment chaud et le compartiment froid sera disposée de façon telle que la surface du plateau disposée dans le compartiment chaud sera sensiblement le double de celle disposée dans le compartiment froid.

La demanderesse a constaté que les meilleurs résultats sont obtenus en choisissant, en tant que gaz, de l'ammoniac et en tant que produit réactif du chlorure de manganèse mélangé et compacté avec un liant thermique expanseur tel que du graphite naturel expansé, la masse volumique apparente de celui-ci étant préférentiellement comprise entre 50 kg/m³ et 150 kg/m³, et la proportion massique de chlorure de manganèse par rapport au graphite naturel expansé est préférentiellement comprise entre 50% et 90%.

Dans de telles conditions il est possible d'obtenir une température inférieure à 4°C dans le compartiment froid et une température supérieure à 63°C dans le compartiment chaud, ce qui correspond aux températures en cours dans ce type d'application.

Suivant l'invention le chariot comportera deux empilements opposés de plateaux-repas et le réacteur et l'évaporateur seront disposés entre ces empilements, respectivement dans le compartiment chaud et dans le compartiment froid.

Afin d'augmenter sa puissance le réacteur pourra comporter des moyens aptes à assurer son préchauffage avant le lancement de la réaction thermochimique, qui pourront être constitués d'un collier chauffant électrique disposé autour de celui-ci, notamment régulé en puissance.

Par ailleurs le chariot pourra comporter des moyens de préchauffage du compartiment chaud avant le lancement de la réaction thermochimique. Ces moyens de préchauffage pourront, dans une variante de mise en oeuvre de l'invention, être constitués des moyens de préchauffage du réacteur.

Le système thermochimique pourra faire appel à plusieurs réacteurs et les moyens de préchauffage de ces derniers pourront être pilotés par des moyens de commande permettant de piloter le fonctionnement de tout ou partie de ces derniers.

Préférentiellement le réacteur sera de forme cylindrique et sera disposé verticalement entre les empilements opposés de plateaux-repas.

On décrira ci-après, à titre d'exemple non limitatif, plusieurs formes d'exécution de la présente invention, en référence au dessin annexé sur lequel :
- la figure 1 est une vue en perspective d'un chariot suivant l'invention,
- la figure 2 est une vue en perspective du chariot représenté sur la figure 1 dont l'une des portes d'accès est en position ouverte,
- la figure 3 est une vue en perspective du chariot représenté sur les figures 1 et 2 dont on a ôté le carénage,
- la figure 4 est une vue schématique du système thermochimique mis en oeuvre dans le chariot suivant l'invention,
- la figure 5 est un diagramme explicitant le fonctionnement du système thermochimique utilisé dans le chariot suivant l'invention,
- la figure 6 est une vue en perspective du chariot suivant l'invention représenté du côté du réservoir du système thermochimique.

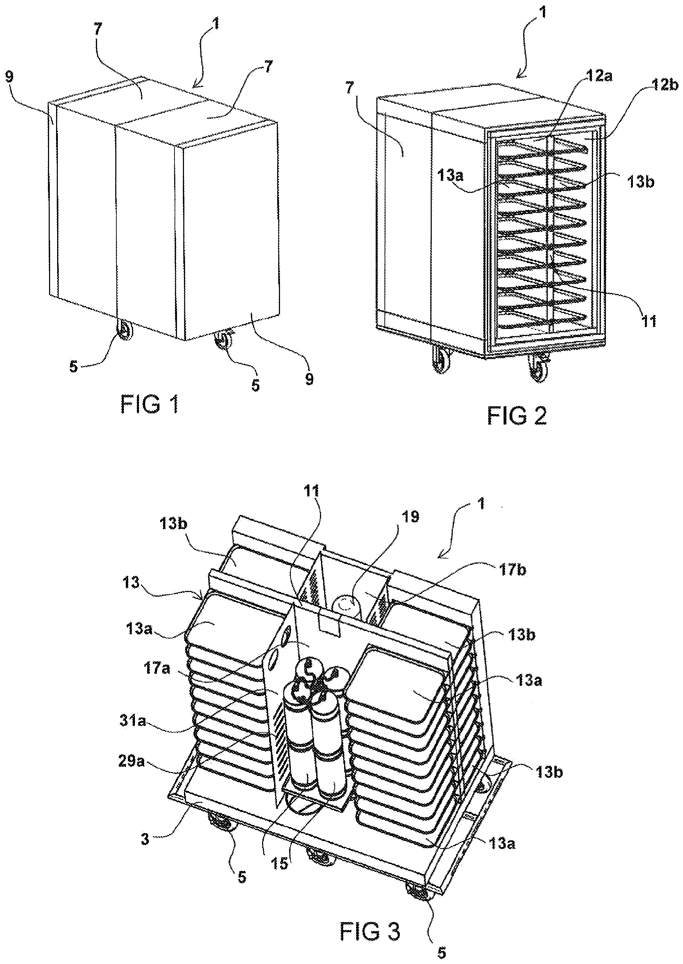

On a représenté sur les figures 1 à 4 un chariot 1 destiné au stockage et à la distribution de plateaux-repas en milieu hospitalier, qui est en mesure de maintenir au chaud une partie de ces derniers et à maintenir au froid l'autre partie de ceux-ci, et ceci durant toute la phase de distribution des plateaux-repas aux malades.

Ce chariot 1 est constitué d'un châssis porteur rectangulaire 3 qui est monté sur des roues 5 et qui supporte une structure formant un double caisson 7 accessible par deux portes opposées 9. Chacun des deux caissons 7 est séparé, dans le sens de la longueur, par une paroi isolante 11 de façon à former d'un côté un compartiment dit « compartiment chaud » 12a et de l'autre côté un compartiment dit « compartiment froid » 12b.

Des plateaux-repas 13 sont empilés et montés à coulissement sur des racks à l'intérieur de ces compartiments chaud et froid de façon qu'une partie 13a de chaque plateau-repas se trouve disposée dans le compartiment chaud 12a et que l'autre partie 13b se trouve disposée dans le compartiment froid 12b. A cet effet la paroi isolante 11 est pourvue, au niveau de chaque plateau-repas 13, d'une fente 14 destinée à la mise en place de celui-ci dans le rack, un joint d'étanchéité élastique venant en appui sur le plateau de façon à empêcher les échanges thermiques entre les deux compartiments chaud et froid.

Dans ce mode de mise en œuvre de l'invention on a prévu entre les deux empilements de plateaux disposés dans le compartiment chaud 12a un volume 17a, dit volume chaud, destiné à recevoir la source chaude d'un système thermochimique qui est formée de quatre réacteurs cylindriques 15 qui sont disposés verticalement dans ce volume afin de privilégier une bonne distribution de la chaleur vers l'empilement de plateaux. De même, on a prévu entre les deux empilements de plateaux disposés dans le compartiment froid 12b un volume 17b, dit volume froid, destiné à recevoir la source froide du système thermochimique qui est formée d'un réservoir d'ammoniac 19 et d'un évaporateur 27 qui est disposé verticalement dans ce volume afin de privilégier une bonne distribution des frigories.

La déposante a établi qu'en disposant ainsi les moyens de chauffage et les moyens de refroidissement directement dans les compartiments respectifs chaud et froid on améliorait de façon sensible les échanges thermiques dans ces compartiments permettant ainsi d'obtenir un chauffage et un refroidissement respectifs homogène des aliments.

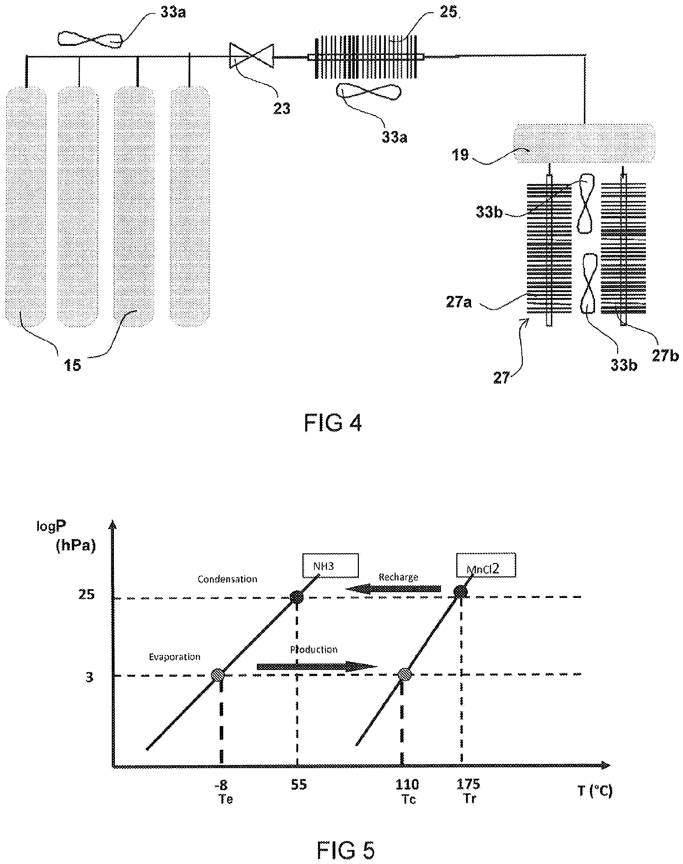

Le système thermochimique qui est représenté sur le schéma de principe de la figure 4, comprend les quatre réacteurs 15 contenant chacun un produit réactif, constitué de chlorure de manganèse qui est mélangé et compacté avec un liant expanseur constitué de graphite naturel expansé, la masse volumique apparente de celui-ci étant préférentiellement comprise entre 50 kg/m³ et 150 kg/m³ et la proportion massique de chlorure de manganèse par rapport au graphite naturel expansé étant préférentiellement comprise entre 50% et 90%.

Ces réacteurs 15 sont en communication, sous le contrôle d'une vanne de commande 23 et d'un condenseur 25, avec le réservoir 19 dans lequel est stocké un gaz spécifique, constitué d'ammoniac, ce réservoir étant en communication avec l'évaporateur 27.

Le produit réactif et le gaz sont tels que le produit réactif est apte, par une réaction thermochimique exothermique, lors d'une phase dite de fonctionnement, à absorber le gaz, générant ainsi un produit de réaction, et à le restituer ensuite, par une réaction thermochimique inverse, lors d'une phase dite de régénération, lorsque l'on chauffe le produit de réaction.

Ainsi, lorsque le réacteur 15 et le réservoir 19 sont mis en communication, le gaz liquide contenu dans le réservoir 19 se vaporise, ce qui absorbe une certaine quantité de chaleur, si bien qu'il y a production de froid côté évaporateur, et ce gaz est absorbé par le matériau réactif, générant ainsi une réaction chimique à absorption exothermique, si bien que le réacteur 15 est la source d'un dégagement de chaleur. Une fois la réaction terminée, lorsque l'on réchauffe le produit de réaction contenu dans le réacteur 15, on libère le gaz absorbé par le matériau réactif et celui-ci se condense alors dans l'évaporateur 27,27a,27b.

Les systèmes thermochimiques de ce type sont connus et peuvent être mis en œuvre avec des sels et des gaz divers. Suivant l'invention on a sélectionné parmi les différents couples possibles sel/gaz un couple de sel et de gaz particulièrement efficace pour la présente application, à savoir le chlorure de manganèse et l'ammoniac et on a mélangé le sel, ainsi qu'exposé précédemment, avec un produit expanseur constitué de graphite naturel expansé dont la masse volumique est préférentiellement comprise entre 50 kg/m³ et 150 kg/m³.

On a représenté sur la figure 5 le diagramme de fonctionnement d'un tel système thermochimique. On constate sur celui-ci que, lors de la phase de fonctionnement de ce système thermochimique, la température d'évaporation Tₑ est de -8°C ce qui permet d'assurer dans le compartiment froid 12b une température inférieure à 4°C et que la température T_{c} du condenseur est de 110°C ce qui permet d'assurer dans le compartiment chaud 12a une température d'au moins 63°C. Le chariot suivant l'invention permet ainsi d'assurer le chauffage et le refroidissement des aliments qu'il contient aux températures respectives préconisées en la matière.

Une fois les plateaux distribués on procédera à la phase de régénération du système thermochimique en réchauffant le produit de réaction contenu dans les réacteurs 15 à une température Tᵣ de 175°C ainsi que montré sur le diagramme de la figure 5 et ceci, par exemple au moyen de colliers chauffants électriques disposés autour de ces réacteurs, sous le contrôle de moyens électroniques de gestion 26 ainsi que précisé ci-après.

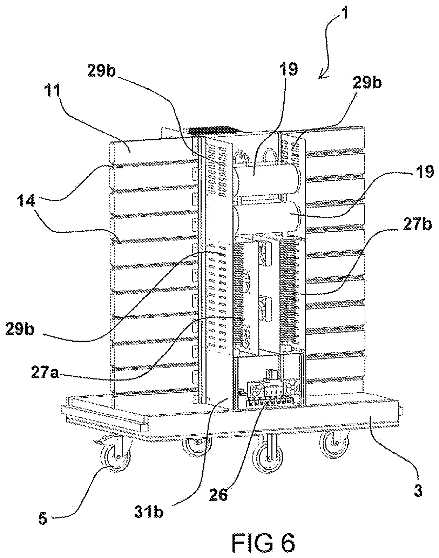

Ainsi que représenté sur les figures 4 et 6, le réservoir de gaz est constitué de deux récipients 19 qui sont disposés dans le compartiment froid 12b, à la partie supérieure du volume froid 17b de celui-ci, et l'évaporateur 27 est formé de deux éléments 27a et 27b qui s'étendent verticalement sous ces derniers suivant l'empilement des plateaux et qui peuvent distribuer le froid produit sur ces derniers au travers de fenêtres 29b qui sont percées dans une cloison 31b permettant de contrôler le flux du froid distribué aux plateaux-repas.

Sous l'évaporateur 27 on a disposé les moyens de gestion électroniques 26 ainsi qu'une batterie permettant d'alimenter l'électronique de commande lorsque le chariot est déconnecté du secteur.

Les quatre réacteurs 15 sont disposés verticalement dans le compartiment chaud 12a, dans le volume chaud 17a de celui-ci, sensiblement suivant la hauteur de l'empilement des plateaux-repas et sont en mesure de délivrer à ces derniers la chaleur fournie lors de la phase de fonctionnement du système thermochimique au travers de fenêtres 29a prévues dans une cloison 31a permettant de contrôler le flux de chaleur distribué aux plateaux-repas.

Par ailleurs, afin de favoriser les échanges thermiques entre d'une part la chaleur produite dans le compartiment chaud et les aliments à réchauffer et d'autre part entre le froid produit dans le compartiment froid et les aliments à refroidir, des ventilateurs 33a permettent d'extraire l'air chaud généré par les réacteurs 15 et de le faire circuler au travers de conduits spécifiques, non représentés sur les dessins, débouchant au niveau de chacun des espaces inter-plateaux du compartiment chaud 12a par les fenêtres 29a.

De même des ventilateurs 33b extraient l'air froid généré au niveau des éléments 27a et 27b de l'évaporateur 27 et le font circuler dans chacun des espaces inter-plateaux du compartiment froid 12b au travers des fenêtres 29b.

Suivant l'invention on peut réaliser un préchauffage des réacteurs 15 lorsque ceux-ci ne sont pas encore en service, c'est-à-dire avant la mise en fonctionnement du système thermochimique. Une telle disposition permet au système de gagner en autonomie et de supprimer la phase de montée en température, à partir de la température ambiante jusqu'à la température de consigne.

De façon intéressante on peut pour ce faire équiper les réacteurs 15 de moyens de chauffage annexes, tels que notamment des manchons ou des colliers de chauffage électriques, qui pourront être pilotés et régulés en puissance par les moyens de gestion électroniques 26.

On pourra suivant l'invention activer le préchauffage sur la totalité ou seulement sur une partie des réacteurs. Ainsi, les réacteurs non préchauffés disposeront d'une puissance d'absorption de l'ammoniac plus importante et de ce fait autoriseront une puissance d'évaporation plus élevée et, en conséquence, une génération de froid plus rapide, ce qui est particulièrement intéressant lors de la mise en température du système thermochimique.

On pourra également, dans une variante de mise en oeuvre de l'invention, prévoir des moyens de production de chaleur permettant de préchauffer le compartiment chaud 12a lorsque le chariot n'est pas en service, c'est-à-dire pendant par exemple son garnissage avec les plateaux-repas ou avant cette opération. Un tel chauffage pourra par exemple être obtenu par les moyens de préchauffage des réacteurs, notamment lorsque ces derniers sont constitués de colliers ou de manchons chauffants.

En utilisant le chariot suivant l'invention on a été en mesure, dans un local dont la température était de 25°C, de maintenir à température et de servir les repas d'une journée entière à des malades en mettant en oeuvre le cycle de fonctionnement suivant:

| **ETAPES** | **OPERATIONS** | **DUREE (h)** |
|---|---|---|
| Petit déjeuner | Remplissage du chariot avec les aliments à chauffer et à refroidir | 0,1 |
| | Service des plateaux-repas aux malades | 1.5 |
| | Phase de fonctionnement du système thermochimique | |
| | Pose | 2,5 |
| Déjeuner | Remplissage du chariot avec les aliments à chauffer et à refroidir | 0,1 |
| | Service des plateaux-repas aux malades | 1,5 |
| | Phase de fonctionnement du système thermochimique | |
| | Pose | 3,5 |
| Dîner | Remplissage du chariot avec les aliments à chauffer et à refroidir | 0,1 |
| | Service des plateau-repas aux malades | 1,5 |
| | Phase de fonctionnement du système thermochimique | |
| | Phase de rechargement du système thermochimique | 6,5 |

La présente invention permet ainsi, à l'inverse des chariots de la technique antérieure, de disposer d'une totale autonomie de fonctionnement pendant une journée entière.

## Revendications

1. Chariot autonome de conditionnement en température et de distribution de plateaux-repas (13) comportant deux empilements opposés de plateaux-repas (13), un système thermochimique du type comportant au moins un réacteur (15), contenant un matériau réactif solide et au moins un réservoir (19) associé à un évaporateur (27,27a,27b) qui contient un gaz liquéfié dans lequel, lorsque le réacteur (15) et le réservoir (19) sont mis en communication, le gaz liquide contenu dans le réservoir (19) se vaporise, ce qui absorbe une certaine quantité de chaleur, si bien qu'il y a production de froid côté évaporateur, et ce gaz est absorbé par le matériau réactif générant ainsi une réaction chimique à absorption exothermique, si bien que le réacteur (15) est la source d'un dégagement de chaleur, et dans lequel, une fois la réaction terminée, lorsque l'on réchauffe le produit contenu dans le réacteur (15), on libère le gaz absorbé par le matériau réactif et celui-ci se condense alors dans l'évaporateur (27,27a,27b), **caractérisé en ce que** ledit chariot comporte deux compartiments séparés par une paroi isolante (11), à savoir un compartiment à chauffer (12a), dit compartiment chaud, et un compartiment à refroidir (12b), dit compartiment froid, **en ce que** lesdits plateaux repas (13) sont disposés de façon qu'une partie (13a) de chaque plateau-repas (13) prenne place dans le compartiment chaud (12a) et l'autre partie (13b) de celui-ci prenne place dans le compartiment froid (12b), **en ce que** le chauffage du compartiment chaud et le refroidissement du compartiment froid sont simultanément obtenus au moyen dudit système thermochimique, **en ce que** le réacteur (15) et l'évaporateur (27,27a,27b) du système thermochimique sont respectivement et exclusivement disposés dans le compartiment chaud (12a) et dans le compartiment froid (12b), **en ce que** ledit réacteur (15) et ledit évaporateur (27, 27a,27b) sont disposés entre lesdits empilements, respectivement dans le compartiment chaud (12a) et dans le compartiment froid (12b) et **en ce que** le matériau réactif est constitué d'un mélange compacté de chlorure de manganèse et de graphite naturel expansé (GNE), et le gaz est constitué d'ammoniac.

2. Chariot suivant la revendication 1 **caractérisé en ce que** la masse volumique apparente du graphite naturel expansé est comprise entre 50 kg/m³ et 150 kg/m³.

3. Chariot suivant l'une des revendications 1 ou 2 **caractérisé en ce que** la proportion massique de chlorure de manganèse par rapport au graphite naturel expansé est comprise entre 50% et 90%.

4. Chariot suivant l'une des revendications précédentes **caractérisé en ce que** le réacteur (15) comporte des moyens aptes à assurer son préchauffage avant le lancement de la réaction thermochimique, notamment constitués d'un collier chauffant électrique disposé autour de celui-ci, notamment régulé en puissance.

5. Chariot suivant l'une des revendications précédentes **caractérisé en ce qu'**il comporte des moyens de préchauffage du compartiment chaud (12a) avant le lancement de la réaction thermochimique.

6. Chariot suivant la revendication 5 **caractérisé en ce que** lesdits moyens de préchauffage du compartiment chaud (12a) sont constitués des moyens de préchauffage du réacteur (15).

7. Chariot l'une des revendications 4 à 6 **caractérisé en ce que** le système thermochimique utilise plusieurs réacteurs (15) et les moyens de préchauffage de ces derniers sont pilotés par des moyens de commande (26) permettant de piloter le fonctionnement de tout ou partie de ces derniers.

8. Chariot suivant l'une des revendications 1 à 7, **caractérisé en ce que** le réacteur (15) est de forme cylindrique et est disposé verticalement entre les empilements opposés de plateaux-repas.

9. Chariot suivant l'une des revendications précédentes **caractérisé en ce que** la paroi isolante (11) entre le compartiment chaud (12a) et le compartiment froid (12b) est disposée de façon telle que la surface (13a) du plateau (13) disposée dans le compartiment chaud (12a) est sensiblement le double de celle (13b) disposée dans le compartiment froid (12b).

## Patentansprüche

1. Autonomer Wagen zum Temperieren und Verteilen von Essenstabletts (13), umfassend zwei einander gegenüberliegende Stapel von Essenstabletts (13), ein thermochemisches System des Typs mit mindestens einem Reaktionsgefäß (15), das ein festes reaktives Material enthält, und mindestens einem Behälter (19), der einem Verdampfer (27, 27a, 27b) zugeordnet ist, der Flüssiggas enthält, in welchem das in dem Behälter (19) enthaltene Flüssiggas verdampft, wenn das Reaktionsgefäß (15) und der Behälter (19) in Verbindung gesetzt werden, wodurch eine bestimmte Menge an Wärme absorbiert wird, so dass auf der Verdampferseite Kälte erzeugt wird, wobei dieses Gas von dem reaktiven Material absorbiert wird, wodurch eine exotherme chemische Absorptionsreaktion erzeugt wird, so dass das Reaktionsgefäß (15) die Quelle einer Wärmefreisetzung ist, wobei nach Beendigung der Reaktion beim Wiedererwärmen des in dem Reaktionsgefäß (15) enthaltenen Produkts das von dem reaktiven Material absorbierte Gas freigesetzt wird und dieses dann in dem Verdampfer (27, 27a, 27b) kondensiert, **dadurch gekennzeichnet, dass** der Wagen zwei durch eine isolierende Wand (11) getrennte Fächer aufweist, nämlich ein Fach zum Wärmen (12a), Wärmefach genannt, und ein Fach zum Kühlen (12b), Kühlfach genannt, dass die Essenstabletts (13) derart angeordnet sind, dass ein Teil (13a) jedes Essenstabletts (13) seinen Platz in dem Wärmefach (12a) und der andere Teil (13b) desselben seinen Platz in dem Kühlfach (12b) einnimmt, dass das Heizen des Wärmefachs und das Kühlen des Kühlfachs mit Hilfe des thermochemischen Systems gleichzeitig erfolgt, dass das Reaktionsgefäß (15) und der Verdampfer (27, 27a, 27b) des thermochemischen Systems jeweils und ausschließlich in dem Wärmefach (12a) und in dem Kühlfach (12b) angeordnet sind, dass das Reaktionsgefäß (15) und der Verdampfer (27, 27a, 27b) zwischen den Stapeln in dem Wärmefach (12a) und dem Kühlfach (12b) angeordnet sind und dass das reaktive Material ein verdichtetes Gemisch aus Manganchlorid und expandiertem Naturgraphit ist und das Gas Ammoniak ist.

2. Wagen nach Anspruch 1, **dadurch gekennzeichnet, dass** die Rohdichte des expandierten Naturgraphits zwischen 50 kg/m³ und 150 kg/m³ beträgt.

3. Wagen nach einem der Ansprüche 1 oder 2, **dadurch gekennzeichnet, dass** das Massenverhältnis von Manganchlorid zu dem expandierten Naturgraphit zwischen 50% und 90% beträgt.

4. Wagen nach einem der vorhergehenden Ansprüche, **dadurch gekennzeichnet, dass** das Reaktionsgefäß (15) Mittel aufweist, die seine Vorerwärmung vor dem Beginn der thermochemischen Reaktion sicherstellen können, insbesondere gebildet durch eine um das Reaktionsgefäß herum angeordnete Heizmanschette, insbesondere mit Leistungsregulierung.

5. Wagen nach einem der vorhergehenden Ansprüche, **dadurch gekennzeichnet, dass** dieser Mittel umfasst zur Vorerwärmung des Wärmefachs (12a) vor Beginn der thermochemischen Reaktion.

6. Wagen nach Anspruch 5, **dadurch gekennzeichnet, dass** die Mittel zur Vorerwärmung des Wärmefachs (12a) durch Vorerwärmungsmittel des Reaktionsgefäßes (15) gebildet sind.

7. Wagen nach einem der Ansprüche 4 bis 6, **dadurch gekennzeichnet, dass** das thermochemische System mehrere Reaktionsgefäße (15) nutzt und die Mittel zur Vorerwärmung derselben durch Steuerungsmittel (26) gesteuert werden, die eine Steuerung des Betriebs aller oder eines Teils der Mittel zur Vorerwärmung ermöglichen.

8. Wagen nach einem der Ansprüche 1 bis 7, **dadurch gekennzeichnet, dass** das Reaktionsgefäß (15) zylinderförmig ist und vertikal zwischen den einander gegenüberliegenden Stapeln von Essenstabletts angeordnet ist.

9. Wagen nach einem der vorhergehenden Ansprüche, **dadurch gekennzeichnet, dass** die isolierende Wand (11) zwischen dem Wärmefach (12a) und dem Kühlfach (12b) derart angeordnet ist, dass die Fläche (13a) des in dem Wärmefach (12a) angeordneten Tabletts etwa doppelt so groß ist wie jene (13b), die in dem Kühlfach (12b) angeordnet ist.

## Claims

1. Self-contained trolley for temperature conditioning and distribution of meal trays (13) including two opposite meal tray (13) stacks, a thermochemical system of the type including at least one reactor (15), containing a solid reactive material and at least one tank (19) associated with an evaporator (27, 27a, 27b) which contains a liquefied gas wherein, when the reactor (15) and the tank (19) are placed in communication, the liquid gas contained in the tank (19) is vaporised, which absorbs a certain quantity of heat, to the extent that cold production takes place on the evaporator side, and this gas is absorbed by the reactive material thus generating an exothermic absorption chemical reaction, to the extent that the reactor (15) is the source of a release of heat, and wherein, once the reaction is complete, when the product contained in the reactor (15) is heated, the gas absorbed by the reactive material is released and it is then condensed in the evaporator (27, 27a, 27b), **characterised in that** said trolley includes two compartments separated by an insulating wall (11), namely a compartment for heating (12a), called the hot compartment, and a compartment for chilling (12b), called the cold compartment, **in that** said meal trays (13) are disposed so that a part (13a) of each meal tray (13) is positioned in the hot compartment (12a) and the other part (13b) thereof is positioned in the cold compartment (12b), **in that** the heating of the hot compartment and the chilling of the cold compartment are simultaneously obtained by means of said thermochemical system, **in that** the reactor (15) and the evaporator (27, 27a, 27b) are disposed between said stacks, respectively in the hot compartment (12a) and in the cold compartment (12b) and **in that** the reactive material consists of a compacted mixture of manganese chloride and expanded natural graphite (ENG), and the gas consists of ammonia.

2. Trolley according to claim 1 **characterised in that** the apparent density of the expanded natural graphite is between 50 kg/m³ and 150 kg/m³.

3. Trolley according to one of claims 1 or 2 **characterised in that** the mass proportion of manganese chloride with respect to expanded natural graphite is between 50% and 90%.

4. Trolley according to one of the preceding claims **characterised in that** the reactor (15) includes means capable of carrying out the heating thereof prior to starting the thermochemical reaction, particularly consisting of an electric heating collar disposed around it, particularly regulated for power.

5. Trolley according to one of the preceding claims **characterised in that** it includes means for preheating the hot compartment (12a) prior to starting the thermochemical reaction.

6. Trolley according to claim 5 **characterised in that** said means for preheating the hot compartment (12a) consist of means for preheating the reactor (15).

7. Trolley according to one of claims 4 to 6 **characterised in that** the thermochemical reaction uses several reactors (15) and the means for preheating them are controlled by control means (26) capable of controlling the operation of all or part thereof.

8. Trolley according to one of claims 1 to 7, **characterised in that** the reactor (15) is of cylindrical shape and is disposed vertically between the opposite meal tray stacks.

9. Trolley according to one of the preceding claims **characterised in that** the insulating wall (11) between the hot compartment (12a) and the cold compartment (12b) is disposed such that the surface (13a) of the tray (13) disposed in the hot compartment (12a) is substantially double that (13b) disposed in the cold compartment (12b).
